# EUROPEAN PATENT SPECIFICATION

(11) **EP 4 095 966 B1**
(45) Date of publication and mention of the grant of the patent: **07.01.2026**
(21) Application number: 21926071.8
(22) Date of filing: 12.04.2021
(51) Int. Cl.: H01M 10/04, H01M 6/00, H01M 50/536

(54) **BATTERY CELL AND MANUFACTURING METHOD THEREFOR, BATTERY, AND ELECTRICAL DEVICE**
BATTERIEZELLE UND HERSTELLUNGSVERFAHREN DAFÜR, BATTERIE UND ELEKTRISCHE VORRICHTUNG
ÉLÉMENT DE BATTERIE, ET PROCÉDÉ DE FABRICATION, BATTERIE ET DISPOSITIF ÉLECTRIQUE

(30) Priority: 09.04.2021 CN 202110380328
(43) Date of publication of application: 30.11.2022
(73) Proprietor: Jiangsu Contemporary Amperex Technology Limited, Changzhou Jiangsu 213300 (CN)
(72) Inventor: SUN, Dongsheng, Changzhou Jiangsu 213300 (CN); ZHU, Linlin, Changzhou Jiangsu 213300 (CN); FANG, Kun, Changzhou Jiangsu 213300 (CN); CHAI, Zhisheng, Changzhou Jiangsu 213300 (CN); CHI, Qingkui, Changzhou Jiangsu 213300 (CN)
(74) Representative: Rowlands, Stuart Michael
(86) International application number: PCT/CN2021/086744
(87) International publication number: WO 2022/213400

(56) References cited:
- CN-A- 101 393 973
- CN-A- 101 393 995
- CN-A- 101 393 995
- CN-A- 106 848 415
- CN-A- 106 848 417
- CN-A- 106 848 418
- CN-A- 106 848 419
- CN-A- 107 069 114
- CN-A- 110 034 326
- JP-A- H05 325 935
- KR-A- 20130 091 532
- KR-B1- 101 850 181
- US-A- 5 021 306
- US-A1- 2006 246 346
- US-B2- 10 326 122

## Description

### TECHNICAL FIELD

The application relates to the technical field of batteries, and particularly relates to an electrode assembly and a manufacturing method therefor, a battery cell and a battery.

### BACKGROUND ART

Battery cells are widely used in electronic devices such as mobile phones, laptops, battery cars, electric vehicles, electric aircrafts, electric boats, electric toy cars, electric toy boats, electric toy planes, electric tools, etc. Battery cells can include nickel-cadmium battery cells, nickel-hydrogen battery cells, lithium ion battery cells and secondary alkaline zinc-manganese battery cells.

As battery cells with higher current are increasingly required in the market, how to increase the current passing capacity of the battery cells is an urgent technical issue to be solved in battery technology.

KR 2013 0091532 A, on which the preamble of claim 1 is based, discloses a cylindrical secondary battery that can improve the contact resistance characteristic of an electrode as the contact area increases between an electrode assembly and a center pin replacing a cathode lead.

KR 101 850 181 B1 discloses a cylindrical lithium-ion secondary battery capable of solving the problem that a positive electrode tab is located within a jellyroll electrode.

US 5 021 306 A discloses a spiral-wound galvanic cell that is based upon a lithium system with a nonaqueous electrolyte, and includes a positive electrode, the carrier of which is clamped within the slit of a simple metal splint which serves as the winding mandrel and current collector

US 10 326 122 B2 discloses a rechargeable battery that includes an electrode assembly including a first electrode, a second electrode, and a separator interposed therebetween, a center pin at a center of the electrode assembly, the center pin including a bonding portion electrically coupled to the first electrode, and a terminal portion connected to one end of the bonding portion, a case housing the electrode assembly, and a gasket insulating between the center pin and the case, the gasket enclosing an edge of the terminal portion of the center pin.

US 2006/246346 A1 discloses filling a case through a fill-hole in a cover of a case. The case is configured to hold an electrode assembly having at least one positive electrode and at least one negative electrode.

### SUMMARY OF THE INVENTION

The application provides a battery cell, a manufacturing method therefor, a battery and an electric device, which can increase the current passing capacity of the battery cell.

In a first aspect, a battery cell according to the invention is defined in claim 1.

In the above solution, the first electrode piece is wound around the adapter, such that a part of the first electrode piece can be affixed to the adapter by its own tension to ensure electrical connection between the first electrode piece and the adapter. In this case, the first electrode piece does not need to be connected to the adapter by a welding process, thereby reducing metallic particles generated during production of the battery cell and reducing the risk of short circuit. A part, affixed to the adapter, of the first electrode piece is in surface contact with the adapter, thereby increasing the contact area between the first electrode piece and the adapter and increasing the current passing capacity.

In some embodiments, the electrode assembly is provided with a first through hole, and at least part of the adapter is accommodated in the first through hole.

In some embodiments, the adapter is provided with a clamping slot, and a part of the first electrode piece is inserted into the clamping slot and connected to the adapter. According to the embodiments of the application, the contact area between the first electrode piece and the adapter can be increased by arranging the clamping slot, thereby increasing the current passing capacity. Exemplarily, the part, inserted into the clamping slot, of the first electrode piece is clamped by the adapter.

In some embodiments, the first electrode piece includes a first coated portion coated with a first active material and a first uncoated portion not coated with the first active material, the first uncoated portion is connected to the first coated portion and located at one end of the first electrode piece in a winding direction. At least part of the first uncoated portion is inserted into the clamping slot. The first uncoated portion is made of a metal foil which is not coated with the first active material and has good conductivity, such that the contact resistance can be reduced and the current passing capacity can be increased.

In some embodiments, the first uncoated portion includes a first part inserted into the clamping slot and a second part connecting the first part and the first coated portion. The second part is at least partially wound around the outside of the adapter and affixed to the adapter. The second part is made of a metal foil which is not coated with the first active material and has good conductivity, and the second part is affixed to the adapter to increase the current passing capacity.

In some embodiments, the second part is wound for at least one turn around the adapter, which can maximize the contact area between the second part and the adapter and increase the current passing capacity.

In some embodiments, the adapter includes a first reel and a second reel which are at least partially spaced, the first reel and the second reel are fixed to the electrode lead-out portion, and the clamping slot is formed between the first reel and the second reel. The first reel and the second reel are configured to clamp the first electrode piece.

In some embodiments, the adapter is provided with a second through hole for accommodating an electrolyte. The second through hole can serve as a flow channel for the electrolyte, which can improve the wettability of the electrode assembly and the electrolyte injection efficiency.

In some embodiments, the first electrode piece goes beyond the adapter in a direction away from the electrode lead-out portion. The adapter fills only a part of the first through hole, and the other part, not filled by the adapter, of the first through hole can be configured to accommodate an electrolyte, such that the electrolyte content of the battery cell can be increased.

According to the invention, the electrode lead-out portion is welded to the adapter.

According to the invention, the electrode lead-out portion includes a first recessed portion recessed with respect to an outer surface, the outer surface is located at one side, away from the electrode assembly, of the electrode lead-out portion, and the adapter is welded to a bottom wall of the first recessed portion. According to the embodiments of the application, the thickness of the bottom wall of the first recessed portion can be reduced by arranging the first recessed portion, such that welding can be performed from one side of the outer surface of the electrode lead-out portion, thereby reducing the risk of sputtering metallic particles generated by welding onto the electrode assembly.

In some embodiments, the electrode lead-out portion includes a first locating portion, and the adapter includes a second locating portion for matching with the first locating portion. The first locating portion can be matched with the second locating portion to achieve localization of the electrode lead-out portion and the adapter during assembly.

In some embodiments, the first locating portion includes a protrusion, and the second locating portion includes a groove. In some other embodiments, the first locating portion includes a groove, and the second locating portion includes a protrusion.

In some embodiments, the housing includes a casing for accommodating the electrode assembly, and the electrode lead-out portion is insulated from the casing. The electrode assembly further includes a second electrode piece, the second electrode piece is at least partially wound around the adapter and is electrically connected to the casing. The casing and the electrode lead-out portion are used as two output poles of the battery cell respectively.

In some embodiments, the casing includes a side wall surrounding the outside of the electrode assembly, and a part of the second electrode piece is affixed to the side wall. Exemplarily, the side wall is in interference fit with the electrode assembly.

In some embodiments, the second electrode piece includes a second coated portion coated with a second active material and a second uncoated portion not coated with the second active material, the second uncoated portion is connected to the second coated portion and located at one end of the second electrode piece in the winding direction. At least part of the second uncoated portion is affixed to the side wall. The second uncoated portion is made of a metal foil which is not coated with the second active material and has good conductivity, such that the contact resistance between the second electrode piece and the casing can be reduced and the current passing capacity can be increased.

In some embodiments, the second uncoated portion is wound for multiple turns around the adapter. The second uncoated portion is welded to the side wall to increase the current passing capacity. According to the embodiments of the application, the second uncoated portion is wound for multiple turns, such that the risk of burning the second coated portion and a separator can be reduced when the casing and the second uncoated portion are welded.

In some embodiments, the casing further includes a bottom wall and a transition wall, the bottom wall is arranged at one side, away from the electrode lead-out portion, of the electrode assembly, the transition wall is connected to the side wall and the bottom wall, and an inner surface of the transition wall is an arc surface. The transition wall can reduce stress concentration during forming of the casing, thereby reducing the risk of rupture of the casing.

In some embodiments, projection of the second coated portion is within projection of the bottom wall in a thickness direction of the bottom wall. In the thickness direction of the bottom wall, the second coated portion can bypass the transition wall, thus reducing the risk of squeezing the second coated portion by the inner surface of the transition wall and reducing the shedding of the second active material from the second coated portion when the electrode assembly vibrates under the action of an external force.

In some embodiments, the battery cell further includes a spacer disposed between the bottom wall and the electrode assembly to separate the second coated portion from the arc surface. The spacer can support the electrode assembly to allow the spacing between the second coated portion and the bottom wall to be greater than or equal to the radius of the arc surface, thereby reducing the risk of squeezing the second coated portion by the arc surface.

In a second aspect, an embodiment of the application provides a battery, including at least one of the battery cells according to any one of the embodiments of the first aspect.

In a third aspect, an embodiment of the application provides an electric device, including the battery of the second aspect, the battery is configured to provide electrical energy.

In a fourth aspect, an embodiment of the application provides a method for manufacturing a battery cell, including: providing an adapter; providing an electrode assembly including a first electrode piece, where the first electrode piece is at least partially wound around the adapter and affixed to the adapter; and providing a housing including an electrode lead-out portion;

putting the adapter and the electrode assembly into the housing, characterized in that the adapter is electrically connected to the electrode lead-out portion and the first electrode piece.

In a fifth aspect not covered by the claims, an embodiment of the application provides a system for manufacturing a battery cell, including: a first supply device, configured to supply an adapter; a second supply device, configured to supply an electrode assembly, where the electrode assembly includes a first electrode piece which is at least partially wound around the adapter and affixed to the adapter; a third supply device, configured to supply a housing including an electrode lead-out portion; and an assembly device, configured to put the adapter and the electrode assembly into the housing, characterized in that the adapter is electrically connected to the electrode lead-out portion and the first electrode piece.

### BRIEF DESCRIPTION OF THE DRAWINGS

In order to describe the technical solutions in the embodiments of the application more clearly, the accompanying drawings required for describing the embodiments are briefly described below. Obviously, the accompanying drawings in the following description show merely some embodiments of the present disclosure, and a person of ordinary skill in the art would also be able to derive other accompanying drawings from these accompanying drawings without creative efforts.
Fig. 1 is a structural schematic diagram of a vehicle provided in some embodiments of the application;
Fig. 2 is an exploded view of a battery provided in some embodiments of the application;
Fig. 3 is an exploded view of the battery module shown in Fig. 2.
Fig. 4 is a schematic structural diagram of a battery cell provided in some embodiments of the application.
Fig. 5 is an exploded view of the battery cell shown in Fig. 4.
Fig. 6 is an exploded view of a battery cell provided in some other embodiments of the application.
Fig. 7 is a sectional view of a battery cell provided in some embodiments of the application.
Fig. 8 is an enlarged view of the battery cell shown in Fig. 7 at the square frame A.
Fig. 9 is a sectional view of an adapter of a battery cell provided in a specific embodiment of the application.
Fig. 10 is a schematic diagram of an electrode assembly of a battery cell provided in some embodiments of the application before being wound around an adapter.
Fig. 11 is a schematic structural diagram of an electrode assembly of a battery cell provided in some embodiments of the application after being wound around an adapter.
Fig. 12 is an enlarged view of the battery cell shown in Fig. 7 at the square frame B.
Fig. 13 is a local sectional view of a battery cell provided in some other embodiments of the application.
Fig. 14 is a schematic flow chart of a method for manufacturing a battery cell provided in some embodiments of the application.
Fig. 15 is a schematic block diagram of a system for manufacturing a battery cell provided in some embodiments of the application.

In the drawings, the components are not drawn to actual scale.

### SPECIFIC EMBODIMENTS

To make the objectives, technical solutions, and advantages of the embodiments of the application clearer, the following will clearly describe the technical solutions in the embodiments of the application with reference to the accompanying drawings in the embodiments of the application. Apparently, the described embodiments are some rather than all of the embodiments of the application. Based on the embodiments of the application, all other embodiments obtained by those of ordinary skill in the art without making creative efforts fall within the scope of protection of the application.

Unless otherwise defined, all technical and scientific terms used in the application have the same meanings as those commonly understood by those who belong to the technical field of the present application. In the application, the terms used in the specification of the application are merely for the purpose of describing specific embodiments, and are not intended to limit the application. The terms "including" and "having" and any variations thereof in the specification and claims of the application and the above accompanying drawings are intended to cover non-exclusive inclusion. The terms "first", "second", etc. in the specification and claims of the application or the above accompanying drawings are used to distinguish different objects, but not to describe a specific order or primary and secondary relationship.

Reference to an "embodiment" in the application means that a specific feature, structure or characteristic described in conjunction with an embodiment may be included in at least one embodiment of the application. The appearance of this phrase in various places in the specification does not necessarily mean the same embodiment, nor is it an independent or alternative embodiment mutually exclusive with other embodiments.

In the description of the application, it should be noted that, unless otherwise explicitly specified and defined, the terms "mounting", "connecting", "connection" and "attachment" should be understood in a broad sense, for example, they may be a fixed connection, a detachable connection, or an integrated connection; and may be a direct connection, or an indirect connection via an intermediate medium, or communication inside two elements. For those of ordinary skill in the art, the specific meanings of the above terms in the application could be understood according to specific circumstances.

As used herein, the term "and/or" is merely used to describe an associated relationship between associated objects and means three relationships, for example, A and/or B may mean A alone, A and B together, and B alone. In addition, the character "/" in the application generally indicates that the associated objects are an "or" relationship.

In the embodiments of the application, the same reference numerals refer to same components, and for the sake of brevity, detailed descriptions of the same components are omitted in different embodiments. It should be understood that a thickness, a length, a width and other dimensions of various components and an overall thickness, length, width and other dimensions of an integrated device shown in the accompanying drawings in the embodiments of the application are merely exemplary, and should not constitute any limitation on the application.

In the application, "a plurality of" refers to more than two (including two), "multiple turns" refers to more than two turns (including two turns), and "multiple layers" refers to more than two layers (including two layers).

In the application, the battery cell may include lithium ion secondary battery cell, lithium sulfur battery cell, sodium lithium ion battery cell, sodium ion battery cell or magnesium ion battery cell, which is not limited by the embodiments of the application. The battery cell may be in cylindrical, flat, cuboid or other shapes, which is not limited by the embodiments of the application. Generally, the battery cells are divided into three types according to packaging manners: cylindrical battery cells, square battery cells and pouch battery cells, which are not limited by the embodiments of the application.

The battery mentioned in the embodiments of the application refers to a single physical module which includes one or a plurality of battery cells and therefore provides a higher voltage and capacity. For example, the battery mentioned in the application may include a battery module or a battery pack, etc. Generally, the battery includes a box for packaging one or a plurality of battery cells. The box may prevent liquid or other foreign matter from affecting charging or discharging of the battery cell.

The battery cell includes an electrode assembly and an electrolyte, and the electrode assembly is composed of a positive electrode piece, a negative electrode piece and a separator. The battery cell works mainly depending on movement of metal ions between the positive electrode piece and the negative electrode piece. The positive electrode piece includes a positive current collector and a positive active material layer, the positive active material layer is coated on a surface of the positive current collector, and a part that is not coated with the positive active material layer of the positive current collector serves as a positive tab. Taking a lithium ion battery as an example, the positive current collector can be made of aluminum, and the positive active material layer includes a positive active material which may be lithium cobaltate, lithium iron phosphate, ternary lithium or lithium manganate. The negative electrode piece includes a negative current collector and a negative active material layer, the negative active material layer is coated on a surface of the negative current collector, and a part that is not coated with the negative active material layer of the negative current collector serves as a negative tab. The negative current collector may be made of copper, and the negative active material layer includes a negative active material which may be carbon or silicon. The separator film may be made from polypropylene (PP), polyethylene (PE), etc. **In** some examples, the electrode assembly may be a winding structure.

The battery cell further includes a housing for accommodating the electrode assembly and an electrolyte. The housing includes a casing and an end cover connected to the casing, the casing and the end cover form an accommodating cavity for accommodating the electrode assembly and the electrolyte. In some embodiments, the battery cell further includes an adapter for electrically connecting the electrode assembly to the end cover, or an electrode terminal arranged at the end cover.

The inventor found that in the related art, the adapter is usually arranged between the electrode assembly and the end cover and connected to the electrode assembly, and the space between the electrode assembly and the end cover is limited. Accordingly, the shape and volume of the adapter are also limited, such that the electrical connection area between the adapter and the electrode assembly is small, thus affecting the current passing capacity of the battery cell. If the current passing capacity of the battery cell is insufficient, the output power and charging/discharging rate of the battery cell will be low, and the battery cell is prone to local overheating.

In view of this, an embodiment of the application provides a technical solution, the battery cell includes: an electrode assembly, including a first electrode piece; a housing, configured to accommodate the electrode assembly and including an electrode lead-out portion; and an adapter, configured to electrically connect the electrode lead-out portion and the first electrode piece, and the first electrode piece is configured such that the first electrode piece is at least partially wound around the adapter and affixed to the adapter. The battery cell with such structure can increase the connection area between the first electrode piece and the adapter, thereby increasing the current passing capacity of the battery cell.

The technical solution described in the embodiment of the application is applicable to batteries and electric devices using the batteries.

The electric devices may be vehicles, mobile phones, portable devices, laptops, ships, spacecraft, electric toys and electric tools. The vehicles may be fuel vehicles, gas vehicles or new energy vehicles, and the new energy vehicles may be battery electric vehicles, hybrid electric vehicles, extended-range vehicles, etc. The spacecrafts include airplanes, rockets, space shuttles, spaceships, etc. The electric toys include fixed or mobile electric toys, such as game machines, electric car toys, electric ship toys and electric airplane toys. The electric tools include metal cutting electric tools, electric grinding tools, electric assembling tools and electric tools for railways, such as electric drills, electric grinders, electric wrenches, electric screwdrivers, electric hammers, impact electric drills, concrete vibrators, electric planers, etc. The embodiment of the application does not impose special restrictions on the above-mentioned electric devices.

For the sake of illustration, the following embodiments are illustrated with a vehicle as an electric device.

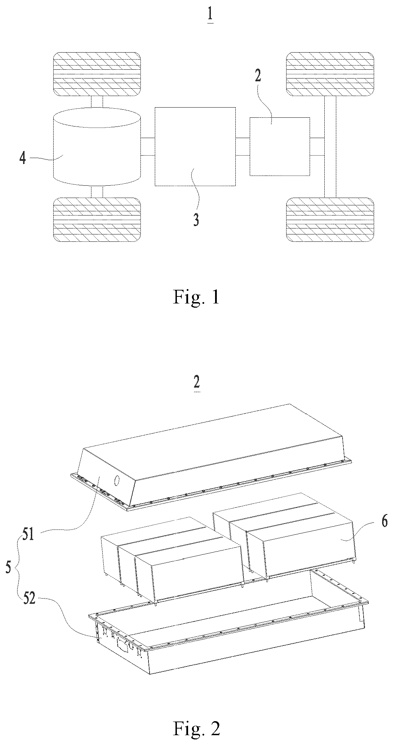

Fig. 1 is a schematic structural diagram of a vehicle 1 provided in some embodiments of the application. As shown in Fig. 1, a battery 2 is disposed inside a vehicle 1, and the battery 2 may be disposed at the bottom, head or tail of the vehicle 1. The battery 2 may be used for supplying electricity to the vehicle 1, for example, the battery 2 may be used as an operating power source for the vehicle 1.

The vehicle 1 may further include a controller 3 and a motor 4, where the controller 3 is used for controlling the battery 2 to supply electricity to the motor 4 to be used for, for example, operating electricity requirements during start-up, navigation and running of the vehicle 1.

In some embodiments of the application, the battery 2 may not only serve as the operating power source for the vehicle 1, but also serve as a driving power source for the vehicle 1, so as to replace or partially replace fuel or natural gas to provide driving power for the vehicle 1.

Fig. 2 is an exploded view of a battery 2 provided in some embodiments of the application. As shown in Fig. 2, the battery 2 includes a box 5 and a battery cell (not shown in Fig. 2), and the battery cell is accommodated in the box 5.

The box 5 is used for accommodating the battery cell and may be of various structures. In some embodiments, the box 5 may include a first box portion 51 and a second box portion 52, the first box portion 51 and the second box portion 52 cover each other and define an accommodating space for accommodating the battery cell. The second box portion 52 may be a hollow structure with one end open, and the first box portion 51 is a plate-like structure. The first box portion 51 covers an open side of the second box portion 52 to form a box 5 with an accommodating space. The first box portion 51 and the second box portion 52 may each be a hollow structure with one side open, and an open side of the first box portion 51 covers the open side of the second box portion 52 to form a box 5 with an accommodating space. Certainly, the first box portion 51 and the second box portion 52 may have various shapes such as cylinder and cuboid.

In order to improve sealability after the first box portion 51 and the second box portion 52 are connected, a seal, such as a sealant or a seal ring, may be arranged between the first box portion 51 and the second box portion 52.

Assuming that the first box portion 51 covers a top portion of the second box portion 52, the first box portion 51 may also be referred to as an upper box cover, and the second box portion 52 may also be referred to as a lower box.

There may be one or more battery cells in the battery 2. If there are a plurality of battery cells, the plurality of battery cells may be connected in series, in parallel, or in a series-parallel manner. The plurality of battery cells may be directly connected in series, in parallel, or in a series-parallel manner, and then a whole formed by the plurality of battery cells is accommodated in the box 5. Of course, the plurality of battery cells may be connected in series, in parallel, or in a series-parallel manner first to form a battery module 6, and then a plurality of battery modules 6 are connected in series, in parallel, or in a series-parallel manner to form a whole to be accommodated in the box 5.

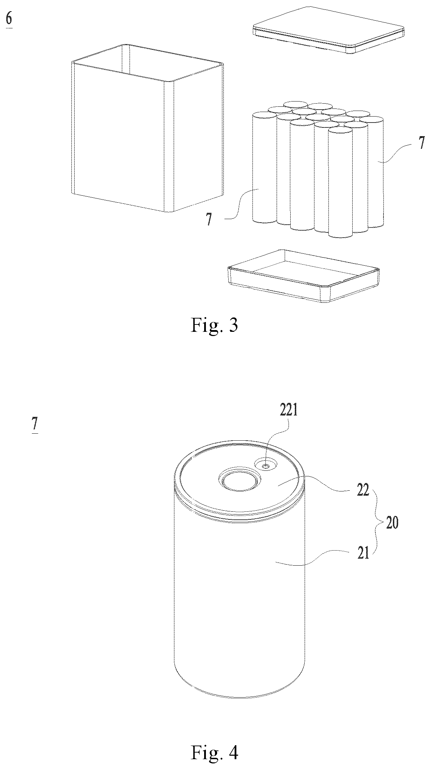

Fig. 3 is an exploded view of the battery module 6 shown in Fig. 2. In some embodiments, as shown in Fig. 3, a plurality of battery cells 7 are provided, and the plurality of battery cells 7 are connected in series, in parallel or in parallel-series to form battery modules 6, then the plurality of battery modules 6 are connected in series, in parallel or in parallel-series to form a single unit, and are accommodated in the box.

The plurality of battery cells 7 in the battery module 6 may be electrically connected to each other by means of bus components, so as to be connected in series, in parallel, or in a series-parallel manner.

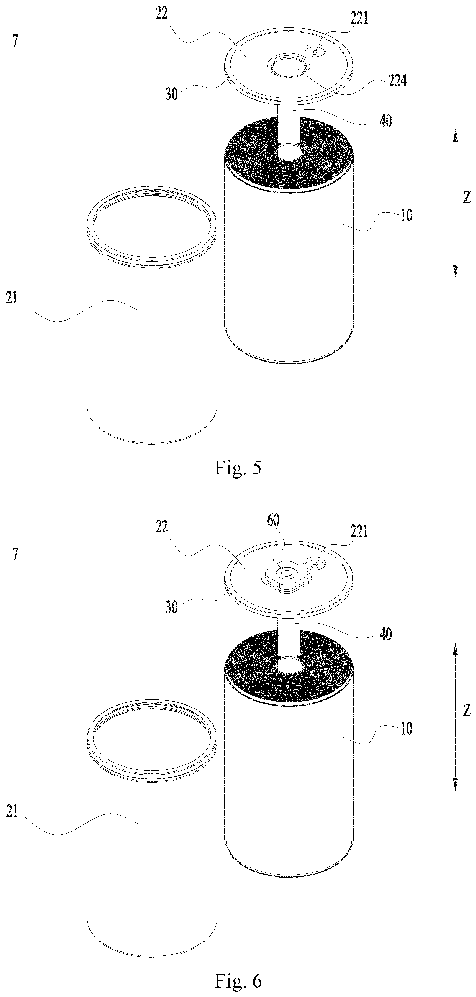

Fig. 4 is a schematic structural diagram of a battery cell provided in some embodiments of the application; and Fig. 5 is an exploded view of the battery cell shown in Fig. 4. As shown in Fig. 4 and Fig. 5, the battery cells 7 provided in the embodiments of the application include an electrode assembly 10 and a housing 20, and the electrode assembly 10 is accommodated in the housing 20.

In some embodiments, the housing 20 may also be used for accommodating an electrolyte, such as an electrolytic solution. The housing 20 may be of various structures.

In some embodiments, the housing 20 may include a casing 21 and an end cover 22, the casing 21 is a hollow structure with an opening, the end cover 22 covers an opening of the casing 21 to form a sealed connection, so as to form a sealed space for accommodating the electrode assembly 10 and an electrolyte.

The casing 21 may be in various shapes, such as a cylinder or a cuboid. The shape of the casing 21 may be determined according to a specific shape of the electrode assembly 10. For example, if the electrode assembly 10 is of a cylindrical structure, a cylindrical casing may be selected and used. If the electrode assembly 10 is of a cuboid structure, a cuboid casing may be selected and used. Of course, the end cover 22 may also be of various structures, for example, the end cover 22 may be of a plate-like structure or a hollow structure with an opening end. Exemplarily, in Fig. 4 and Fig. 5, the casing 21 is a cylindrical structure, and the end cover 22 is a plate-like structure and covers an opening of the casing 21.

In some embodiments, the battery cell 7 further includes a sealing member 30 that separates the end cover 22 from the casing 21. The sealing member 30 is configured to seal the opening of the casing 21 to improve the sealability of the battery cell 7. The sealing member 30 may be made of polypropylene (PP), polyethylene (PE) or fluororubber. In some embodiments, the sealing member 30 is made of an insulating material capable of insulating the end cover 22 from the casing 21.

In some embodiments, the housing 20 includes a casing 21 and an end cover 22, the casing 21 is a hollow structure with an end open, the end cover 22 covers the opening of the casing 21 to form a sealed connection. The sealing member 30 insulates the end cover 22 from the casing 21.

In some other embodiments, the housing 20 includes a casing 21 and two end covers 22, the casing 21 is a hollow structure with opposite sides open, and each of the end covers 22 covers a corresponding opening of the casing 21 correspondingly to form a sealed connection, so as to form a sealed space for accommodating the electrode assembly 10 and an electrolyte. In some examples, one end cover 22 may be directly connected to the casing 21, e.g., welded to the casing 21, and the other end cover 22 is insulated from the casing 21 by the sealing member 30.

In some embodiments, the end cover 22 is provided with an electrolyte injection hole 221 running through the end cover 22 in a thickness direction of the end cover 22. In an electrolyte injection process of the battery cell 7, an electrolyte is injected into the battery cell 7 through the electrolyte injection hole 221. The battery cell 7 further includes a sealing plate (not shown) which is connected to the end cover 22 and covers the electrolyte injection hole 221 for sealing the electrolyte injection hole 221 after the electrolyte injection process is completed.

The housing 20 includes an electrode lead-out portion for leading out current from the electrode assembly 10 to output electrical energy generated by the electrode assembly 10. In some embodiments, the end cover 22 serves as the electrode lead-out portion and is electrically connected to the electrode assembly 10.

In some embodiments, the battery cell 7 further includes an adapter 40 for electrically connecting the electrode lead-out portion and the electrode assembly 10.

Fig. 6 is an exploded view of a battery cell provided in some other embodiments of the application. As shown in Fig. 6, in some embodiments, the housing 20 further includes an electrode terminal 60 arranged on the end cover 22, the electrode terminal 60 serves as the electrode lead-out portion and is electrically connected to the electrode assembly 10. Exemplarily, the adapter 40 is welded to the electrode terminal 60.

For sake of description, the embodiments of the application will be described below with the end cover 22 as the electrode lead-out portion.

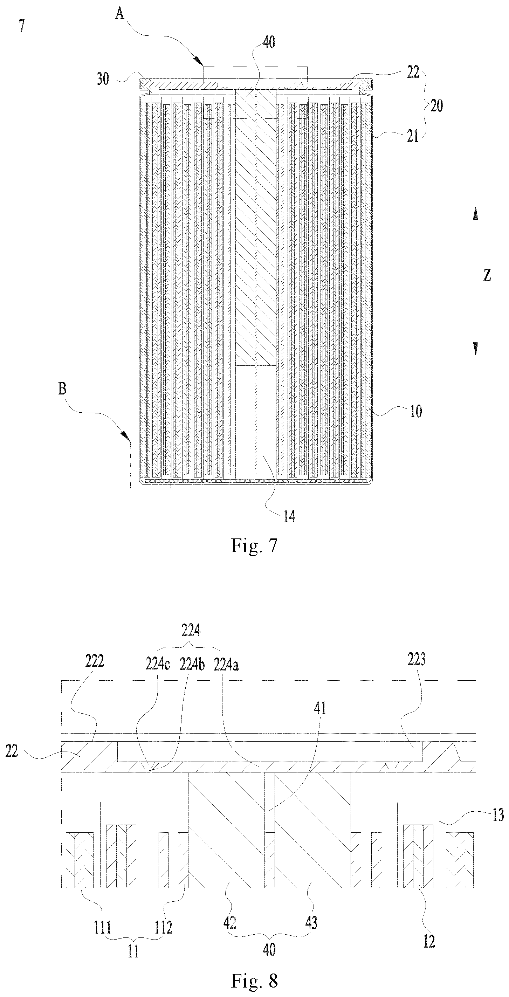

Fig. 7 is a sectional view of a battery cell provided in some embodiments of the application; and Fig. 8 is an enlarged view of the battery cell shown in Fig. 7 at the square frame A.

As shown in Fig. 7 and Fig. 8, in some embodiments, the electrode assembly 10 includes a first electrode piece 11 and a second electrode piece 12 that are laminated. In some embodiments, both the first electrode piece 11 and the second electrode piece 12 are strip structures, the first electrode piece 11 and the second electrode piece 12 are wound integrally in a winding direction to form a winding structure. In some examples, the winding structure is a cylindrical structure.

The polarity of the first electrode piece 11 is opposite to that of the second electrode piece 12. In some examples, the first electrode piece 11 is a positive electrode piece and the second electrode piece 12 is a negative electrode piece. In some other examples, the first electrode piece 11 is a negative electrode piece and the second electrode piece 12 is a positive electrode piece.

In some embodiments, the electrode assembly 10 further includes a separator 13 for separating the first electrode piece 11 from the second electrode piece 12. Exemplarily, the first electrode piece 11, the second electrode piece 12 and the separator 13 are wound together.

In some embodiments, the first electrode piece 11 includes a first coated portion 111 coated with a first active material and a first uncoated portion 112 not coated with the first active material. Exemplarily, the first electrode piece 11 is a positive electrode piece, and the first active material may be lithium cobaltate, lithium iron phosphate, ternary lithium or lithium manganate. The second electrode piece 12 includes a second coated portion coated with a second active material and a second uncoated portion not coated with the second active material. Exemplarily, the second electrode piece 12 is a negative electrode piece, and the second active material may be carbon or silicon.

In order to electrically connect the first electrode piece 11 to the end cover 22, the inventor tried to arrange the first uncoated portion 112 at one side, near the end cover 22, of the first coated portion 111, and electrically connect the first uncoated portion 112 to the end cover 22 by means of the adapter 40. The first uncoated portion 112 is wound into a multilayer structure, and the adapter 40 is arranged between the first uncoated portion 112 and the end cover 22 and connected to the first uncoated portion 112 and the end cover 22 by a welding process. However, metallic particles are prone to be generated when welding the first uncoated portion 112 and the adapter 40, and the risk of short circuit may arise if the metallic particles fall into the electrode assembly 10. Since the first uncoated portion 112 is made of a metal foil with a small thickness, an end of the first uncoated portion 112 is approximately in line contact with the adapter 40, resulting in a low current passing capacity of the battery cell. In order to achieve welding, the inventor flattened ends of the first uncoated portion 112 to form a dense layer. However, the dense layer will block the electrolyte and affect the wettability of the electrode assembly 10.

Based on the above problems discovered by the inventor, the inventor has improved a structure of the battery cell, which will be described in detail below with reference to different embodiments.

In the battery cell 7 according to the embodiments of the application, the first electrode piece 11 is configured such that the first electrode piece 11 is at least partially wound around the adapter 40 and affixed to the adapter 40. The first electrode piece 11 is wound around the adapter 40, such that a part of the first electrode piece 11 can be affixed to the adapter 40 by its own tension to ensure electrical connection between the first electrode piece 11 and the adapter 40. In this case, the first electrode piece 11 does not need to be connected to the adapter 40 by a welding process, thereby reducing metallic particles generated during production of the battery cell 7 and reducing the risk of short circuit. Accordingly, in the embodiments of the application, the wettability of the electrode assembly 10 can be improved without the need for flattening the first electrode piece 11.

The first electrode piece 11 is at least partially wound around the adapter 40 and affixed to the adapter 40, such that a part, affixed to the adapter 40, of the first electrode piece 11 is in surface contact with the adapter 40, thereby increasing the contact area between the first electrode piece 11 and the adapter 40 and increasing the current passing capacity.

In some embodiments, the second electrode piece 12 is at least partially wound around the adapter 40. Exemplarily, the second electrode piece 12 is wound with the adapter 40 as a central axis.

In some embodiments, the separator 13 is at least partially wound around the adapter 40. Exemplarily, the separator 13 is wound with the adapter 40 as a central axis.

In some embodiments, the adapter 40 may serve as a central axis for winding and forming the electrode assembly 10. When the electrode assembly 10 is prepared, the first electrode piece 11, the separator 13 and the second electrode piece 12 are laminated and then wound together around the adapter 40 to form the electrode assembly 10 with a winding structure. Exemplarily, the electrode assembly 10 is wound around a direction perpendicular to an axial direction Z. Optionally, the axial direction Z is parallel to a length direction of the adapter 40.

In some embodiments, the electrode assembly 10 is provided with a first through hole 14, and at least part of the adapter 40 is accommodated in the first through hole 14. The electrode assembly 10 is wound around the adapter 40, and due to the presence of the adapter 40, the electrode assembly 10 forms a first through hole 14 at the winding centre. A structure of the battery cell 7 can be made compact by accommodating the adapter 40 in the first through hole 14 at the winding centre, which is favorable for improving the energy density of the battery cell 7.

In some embodiments, the first electrode piece 11 goes beyond the adapter 40 in a direction away from the end cover 22. In some embodiments, the second electrode piece 12 and the separator 13 also go beyond the adapter 40 in the direction away from the end cover 22. The adapter 40 fills only a part of the first through hole 14, and the other part, not filled by the adapter 40, of the first through hole 14 can be configured to accommodate an electrolyte, such that the electrolyte content of the battery cell can be increased.

According to the invention, the end cover 22 is connected to the adapter 40 by welding.

According to the invention, the end cover 22 includes a first recessed portion 223 recessed with respect to an outer surface 222, the outer surface 222 is located at one side, away from the electrode assembly 10, of the end cover 22, and the adapter 40 is welded to a bottom wall 224 of the first recessed portion. Exemplarily, the outer surface 222 is substantially flat. The thickness of the part (i.e., the bottom wall 224 of the first recessed portion), welded to the adapter 40, of the end cover 22 can be reduced by arranging the first recessed portion 223. In this case, laser can act on the bottom wall 224 of the first recessed portion to weld the end cover 22 and the adapter 40. In other words, welding can be performed from one side of the outer surface 222 of the end cover 22 according to the embodiments of the application, thereby reducing the risk of sputtering metallic particles generated by welding onto the electrode assembly 10.

In some embodiments, a bottom wall 224 of the first recessed portion includes a connecting region 224a and a weak region 224b surrounding the connecting region 224a, the connecting region 224a is welded to the adapter 40, and the weak region 224b surrounds the outside of the connecting region 224a and is configured to rupture when internal pressure or temperature of the battery cell 7 reaches a threshold value. When such phenomena as short circuit and overcharge occur, thermal runaway may occur in the battery cell 7, resulting in a sudden increase in pressure or temperature. In this case, the internal pressure or temperature of the battery cell 7 reaches a predetermined threshold, and the weak region 224b is destroyed, thereby forming an opening or channel for discharging emissions from the battery cell to prevent the battery cell 7 from exploding and catching fire. Emissions from the battery cell include, but are not limited to, electrolyte, dissolved or split electrode pieces, fragments of separators, high-temperature and high-pressure gas and flame produced by reaction, and so on.

In some embodiments, when the weak region 224b ruptures, a part, surrounding the outside of the weak region 224b, of the end cover 22 is disconnected from the connecting region 224a, and under the internal pressure of the battery cell 7, the part of the end cover 22 is broken through and separated from the casing 21, thereby rapidly discharging emissions.

In some embodiments, the bottom wall 224 of the first recessed portion is provided with a second recessed portion 224c, and the weak region 224b is a bottom wall of the second recessed portion 224c. According to the embodiments of the application, the thickness of the weak region 224b is reduced by arranging the second recessed portion 224c, such that the weak region 224b can rupture when the internal pressure or temperature of the battery cell 7 reaches a predetermined threshold, so as to quickly discharge emissions.

In some other embodiments, the weak region 224b may be made of a temperature sensitive material, and the weak region 224b melts when the temperature of the battery cell 7 reaches a predetermined threshold, so as to quickly discharge emissions.

In some embodiments, the end cover 22 is provided with a mounting hole (not shown) running in a thickness direction of the end cover, and the adapter 40 is inserted into the mounting hole and welded to the end cover 22. The adapter 40 can be exposed by arranging the mounting hole, and the adapter 40 can be connected to the end cover 22 by butt welding.

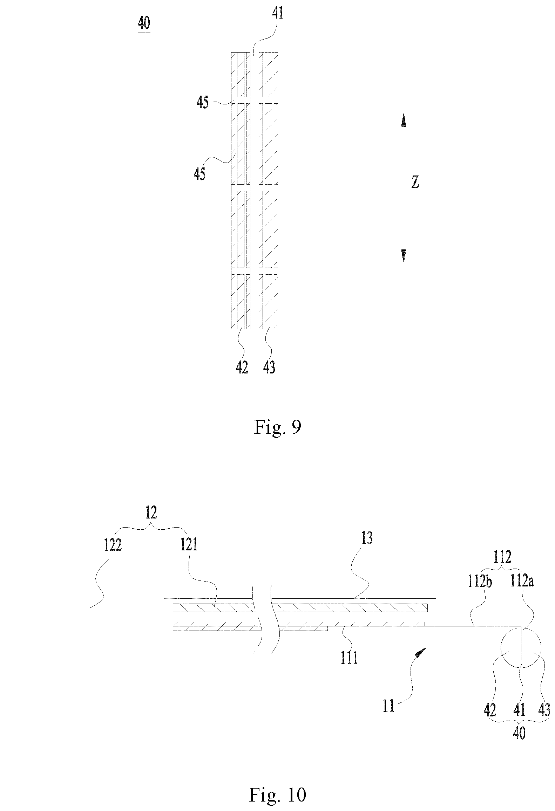

Fig. 9 is a sectional view of an adapter of a battery cell provided in a specific embodiment of the application. In some embodiments, the adapter 40 is provided with a second through hole 45 for accommodating an electrolyte. The second through hole 45 can serve as a flow channel for the electrolyte, which can improve the wettability of the electrode assembly. In an electrolyte injection process, the second through hole 45 can also improve the electrolyte injection efficiency.

In some embodiments, a plurality of second through holes 45 are provided. Exemplarily, some of the second through holes 45 extend in an axial direction Z of the adapter 40, and some of the second through holes 45 extend in a radial direction of the adapter 40. The second through holes 45 extending in the axial direction Z may communicate with the second through holes 45 extending in the radial direction.

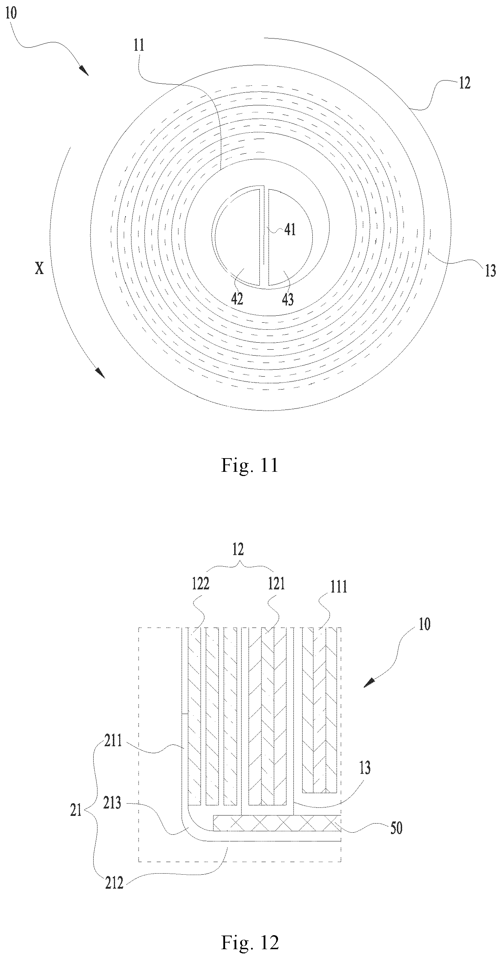

Fig. 10 is a schematic diagram of an electrode assembly of a battery cell provided in some embodiments of the application before being wound around an adapter; and Fig. 11 is a schematic structural diagram of an electrode assembly of a battery cell provided in some embodiments of the application after being wound around an adapter.

Referring to Fig. 8 to Fig. 11, in some embodiments, the adapter 40 is provided with a clamping slot 41, and a part of the first electrode piece 11 is inserted into the clamping slot 41 and connected to the adapter 40. According to the embodiments of the application, the contact area between the first electrode piece 11 and the adapter 40 can be increased by arranging the clamping slot 41, thereby increasing the current passing capacity.

In some embodiments, the part, inserted into the clamping slot 41, of the first electrode piece 11 is clamped by the adapter 40. Specifically, when the electrode assembly 10 is to be prepared, one layer of separator 13, the second electrode piece 12, another layer of separator 13 and the first electrode piece 11 are sequentially laminated, and one end of the first electrode piece 11 is inserted into the clamping slot 41 of the adapter 40 and clamped, then a winder drives the adapter 40 to rotate, and the adapter 40 drives the first electrode piece 11 to run and wind around the adapter 40. Meanwhile, driven by a frictional force, the second electrode piece 12 and the separator 13 will also run with the first electrode piece 11 and be wound around the adapter 40.

In some embodiments, the adapter 40 is provided with a first limit structure, and a part, inserted into the clamping slot 41, of the first electrode piece 11 is provided with a second limit structure matched with the first limit structure. The first electrode piece 11 can be fixed to the adapter 40 by matching the first limit structure with the second limit structure. Exemplarily, the first limit structure may include a plurality of protrusions that protrude from a wall of the clamping slot 41. The second limit structure includes a groove for insertion of the protrusions. The first electrode piece 11 can be fixed to the adapter 40 through the cooperation of the protrusions and the groove.

In some other embodiments, the first electrode piece 11 is bonded to the wall of the clamping slot 41 by a conductive adhesive.

In some embodiments, the first uncoated portion 112 is connected to the first coated portion 111 and located at one end of the first electrode piece 11 in a winding direction X. Exemplarily, the first uncoated portion 112 is located at an inner end of the first electrode piece 11 in the winding direction X. At least part of the first uncoated portion 112 is inserted into the clamping slot 41. The first uncoated portion 112 is affixed to the wall of the clamping slot 41. The first uncoated portion 112 is made of a metal foil which is not coated with the first active material and has good conductivity, such that the contact resistance can be reduced and the current passing capacity can be increased. In addition, the part, inserted into the clamping slot 41, of the first electrode piece 11 cannot achieve deintercalation of lithium ions. Therefore, compared with the technical solution in which the first coated portion 111 is inserted into the clamping slot 41, the technical solution in which the first uncoated portion 112 is inserted into the clamping slot 41 can save the first active material and reduce waste of the first active material.

In some embodiments, the first uncoated portion 112 includes a first part 112a inserted into the clamping slot 41 and a second part 112b connecting the first part 112a and the first coated portion 111. The second part 112b is at least partially wound around the outside of the adapter 40 and affixed to the adapter 40. The second part 112b is made of a metal foil which is not coated with the first active material and has good conductivity, and the second part 112b is affixed to the adapter 40 to increase the current passing capacity.

In some embodiments, the second part 112b is wound for at least one turn around the adapter 40, which can maximize the contact area between the second part 112b and the adapter 40 and increase the current passing capacity.

In some embodiments, the adapter 40 includes a first reel 42 and a second reel 43 which are at least partially spaced, the first reel 42 and the second reel 43 are fixed to the end cover 22, and the clamping slot 41 is formed between the first reel 42 and the second reel 43. In some embodiments, the first reel 42 and the second reel 43 are two semicircular shafts. The first reel 42 and the second reel 43 can clamp the first part 112a while winding the electrode assembly 10. When the electrode assembly 10 is completed, the first reel 42 and the second reel 43 are fixed to the end cover 22 by welding or other means.

Fig. 12 is an enlarged view of the battery cell shown in Fig. 7 at the square frame B.

As shown in Fig. 12, in some embodiments, the end cover 22 is insulated from the casing 21, and the second electrode piece 12 is electrically connected to the casing 21. In this case, the casing 21 and the end cover 22 serve as two output poles of the battery cell 7 respectively, thereby omitting two electrode terminals in the conventional battery cell 7.

In some embodiments, the casing 21 includes a side wall 211 surrounding the outside of the electrode assembly 10. Exemplarily, the side wall 211 is cylindrical. A part of the second electrode piece 12 is affixed to the side wall 211, such that the second electrode piece 12 is electrically connected to the side wall 211.

In some embodiments, the second uncoated portion 122 is connected to the second coated part 121 and located at one end of the second electrode piece 12 in the winding direction. Exemplarily, the second uncoated portion 122 is located at an outer end of the second electrode piece 12 in the winding direction. At least part of the second uncoated portion 122 is affixed to the side wall 211. The second uncoated portion 122 is made of a metal foil which is not coated with the second active material and has good conductivity, such that the contact resistance between the second electrode piece 12 and the casing 21 can be reduced and the current passing capacity can be increased.

The second uncoated portion 122 is wound for at least one turn around the adapter 40. The outermost ring of the electrode assembly 10 is the second uncoated portion 122. When the electrode assembly 10 and the casing 21 are assembled, the casing 21 may be heated to expand before the electrode assembly 10 is put into the casing 21. The casing 21 contracts when cooled and is in interference fit with the electrode assembly 10, thereby ensuring that the second uncoated portion 122 is affixed to the side wall 211.

In some embodiments, the second uncoated portion 122 is wound for multiple turns around the adapter 40. The second uncoated portion 122 is welded to the side wall 211. After the electrode assembly 10 is put into the casing 21, the side wall 211 and the second uncoated portion 122 are welded from the outside, which can reduce the resistance between the second uncoated portion 122 and the casing 21 and increase the current passing capacity. The second uncoated portion 122 is made of a metal foil, which has a small thickness and can be easily melted through. According to the embodiments of the application, the second uncoated portion 122 is wound for multiple turns, such that the risk of burning the second coated portion 121 and the separator 13 can be reduced when the casing 21 and the second uncoated portion 122 are welded.

In some embodiments, the casing 21 is a hollow structure with one end open. The casing 21 further includes a bottom wall 212 connected to the side wall 211 and arranged at one side, away from the end cover, of the electrode assembly 10.

In some embodiments, the casing 21 further includes a transition wall 213 connecting the side wall 211 and the bottom wall 212, and an inner surface of the transition wall 213 is an arc surface. Exemplarily, the casing 21 is formed by a stamping process, and the transition wall 213 is a fillet formed by stamping. Stress concentration can be reduced by arranging the transition wall 213, thereby reducing the risk of rupture of the casing 21.

Since the inner surface of the transition wall 213 is an arc surface, the inner surface of the transition wall 213 may squeeze the electrode assembly 10 when the electrode assembly 10 vibrates up and down. In some embodiments, projection of the second coated portion 121 is within projection of the bottom wall 212 in a thickness direction of the bottom wall 212. That is, in the thickness direction of the bottom wall 212, the second coated portion 121 can bypass the transition wall 213, thus reducing the risk of squeezing the second coated portion 121 by the inner surface of the transition wall 213 and reducing the shedding of the second active material from the second coated portion 121 when the electrode assembly 10 vibrates under the action of an external force.

In some embodiments, the second uncoated portion 122 is wound around the adapter 40 for multiple turns, and the total thickness of the multiple turns of the second uncoated portion 122 is greater than or equal to the radius of the inner surface of the transition wall 213, such that the second coated portion 121 can bypass the transition wall 213. The second uncoated portion 122 is made of a metal foil, such that the second active material will not shed when squeezed by the inner surface of the transition wall 213.

In some embodiments, the battery cell 7 further includes a spacer 50 disposed between the bottom wall 212 and the electrode assembly 10 to separate the second coated portion 121 from the arc surface. The spacer 50 can support the electrode assembly 10 to allow the spacing between the second coated portion 121 and the bottom wall 212 to be greater than or equal to the radius of the arc surface, thereby reducing the risk of squeezing the second coated portion 121 by the arc surface.

In the thickness direction of the bottom wall 212, both ends of the separator 13 go beyond the second electrode piece 12, therefore, the separator 13 can support the second coated portion 121 to some extent, and the thickness of the spacer 50 can be slightly smaller than the radius of the arc surface.

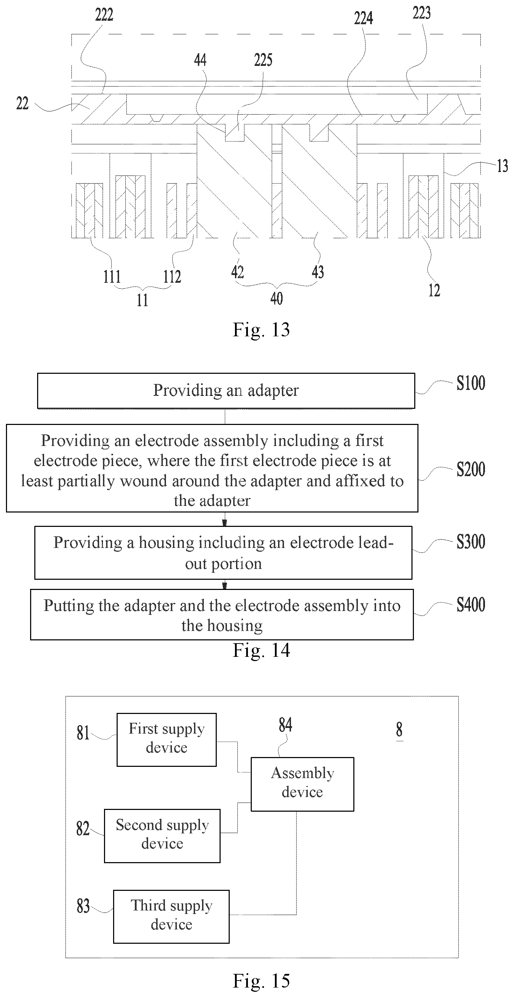

Fig. 13 is a local sectional view of a battery cell provided in some other embodiments of the application.

As shown in Fig. 13, the end cover 22 includes a first locating portion 225, and the adapter 40 includes a second locating portion 44 for matching with the first locating portion 225. When the end cover 22 and the adapter 40 are assembled, the first locating portion 225 can be matched with the second locating portion 44 to achieve localization between the end cover 22 and the adapter 40.

In some embodiments, the first locating portion 225 includes a protrusion, and the second locating portion 44 includes a groove. In some other embodiments, the first locating portion 225 includes a groove, and the second locating portion 44 includes a protrusion. In some embodiments, the first locating portion 225 includes a first protrusion and a first groove, and the second locating portion 44 includes a second groove and a second protrusion. The first protrusion is matched with the second groove, and the second protrusion is matched with the first groove.

In some embodiments, the first reel 42 and the second reel 43 are each provided with a second locating portion 44.

Fig. 14 is a schematic flow chart of a method for manufacturing a battery cell provided in some embodiments of the application.

As shown in Fig. 14, the method for manufacturing the battery cell in the embodiments of the application includes:
S100 for providing an adapter;
S200 for providing an electrode assembly including a first electrode piece, the first electrode piece being at least partially wound around the adapter and affixed to the adapter;
S300 for providing a housing including an electrode lead-out portion; and
S400 for putting the adapter and the electrode assembly into the housing.
characterized in that the adapter is electrically connected to the electrode lead-out portion and the first electrode piece.

It should be noted that for relevant structures of battery cells manufactured by the method for manufacturing the battery cell, refer to the battery cell provided in the above embodiments.

When assembling battery cells based on the method for manufacturing the battery cell, it is not necessary to follow the above steps sequentially, that is, the steps can be performed in the sequence mentioned in the embodiments, or in a sequence different from that mentioned in the embodiments, or several steps can be performed simultaneously. For example, step S100 and step S300 may be performed in any sequence, or performed simultaneously.

Fig. 15 is a schematic block diagram of a system for manufacturing a battery cell provided in some non-claimed embodiments of the application.

As shown in Fig. 15, the system 8 for manufacturing the battery cell includes: a first supply device 81, configured to supply an adapter; a second supply device 82, configured to supply an electrode assembly, where the electrode assembly includes a first electrode piece which is at least partially wound around the adapter and affixed to the adapter; a third supply device 83, configured to supply a housing including an electrode lead-out portion; and an assembly device 84, configured to put the adapter and the electrode assembly into the housing, characterized in that the adapter is electrically connected to the electrode lead-out portion and the first electrode piece.

For relevant structures of battery cells manufactured by the manufacturing system, refer to the battery cell provided in the above embodiments.

It should be noted that the embodiments in the application and features in the embodiments may be combined with one another if there is no conflict.

Finally, it should be noted that the above embodiments are merely used to describe the technical solution of the application, rather than limiting the same. Although the application has been described in detail with reference to the foregoing embodiments, those skilled in the art should understand that the technical solution described in the foregoing embodiments may still be modified, or some of the technical features therein may be equivalently replaced. However, these modifications or substitutions do not make the essence of the corresponding technical solutions deviate from the scope of the invention as defined by the appended claims.

## Claims

1. A battery cell (7), comprising:
an electrode assembly (10), comprising a first electrode piece (11);
a housing (20), configured to accommodate the electrode assembly (10) and comprising an electrode lead-out portion; and
an adapter (40), configured to electrically connect the electrode lead-out portion and the first electrode piece (11), the first electrode piece (11) being configured such that the first electrode piece (11) is at least partially wound around the adapter (40) and affixed to the adapter (40);
**characterised in that**
the electrode lead-out portion comprises a first recessed portion (223) recessed with respect to an outer surface (222), the outer surface (222) is located at one side, away from the electrode assembly (10), of the electrode lead-out portion, and the adapter (40) is welded to a bottom wall of the first recessed portion (223).

2. The battery cell (7) according to claim 1, wherein the electrode assembly (10) is provided with a first through hole (14), and at least part of the adapter (40) is accommodated in the first through hole (14).

3. The battery cell (7) according to claim 1, wherein the adapter (40) is provided with a clamping slot (41), and a part of the first electrode piece (11) is inserted into the clamping slot (41) and connected to the adapter (40), preferably wherein the first electrode piece (11) comprises a first coated portion (111) coated with a first active material and a first uncoated portion (112) not coated with the first active material, the first uncoated portion (112) is connected to the first coated portion (111) and located at one end of the first electrode piece (11) in a winding direction;
at least part of the first uncoated portion (112) being inserted into the clamping slot (41),
more preferably wherein the first uncoated portion (112) comprises a first part (112a) inserted into the clamping slot (41) and a second part (112b) connecting the first part (112a) and the first coated portion (111);
the second part (112b) is at least partially wound around the outside of the adapter (40) and affixed to the adapter (40), and still more preferably wherein the second part (112b) is wound for at least one turn around the adapter (40).

4. The battery cell (7) according to claim 3, wherein the adapter (40) comprises a first reel (42) and a second reel (43) which are at least partially spaced, the first reel (42) and the second reel (43) are fixed to the electrode lead-out portion, and the clamping slot (41) is formed between the first reel (42) and the second reel (43).

5. The battery cell (7) according to any one of claims 1 to 4, wherein the adapter (40) is provided with a second through hole for accommodating an electrolyte, and/or wherein the first electrode piece (11) goes beyond the adapter (40) in a direction away from the electrode lead-out portion.

6. The battery cell (7) according to any one of claims 1 to 5, wherein the electrode lead-out portion comprises a first locating portion (225), and the adapter comprises a second locating portion (44) for matching with the first locating portion, and preferably wherein
the first locating portion (225) comprises a protrusion, and the second locating portion (44) comprises a groove; or
the first locating portion (225) comprises a groove, and the second locating portion (44) comprises a protrusion.

7. The battery cell (7) according to any one of claims 1 to 6, wherein
the housing (20) comprises a casing (21) for accommodating the electrode assembly (10), and the electrode lead-out portion is insulated from the casing (21);
the electrode assembly (10) further comprises a second electrode piece (12), the second electrode piece (12) is at least partially wound around the adapter (40) and is electrically connected to the casing (21), and preferably wherein the casing (21) comprises a side wall (211) surrounding the outside of the electrode assembly (10), and a part of the second electrode piece (12) is affixed to the side wall (211).

8. The battery cell (7) according to claim 7, wherein the second electrode piece (12) comprises a second coated portion (121) coated with a second active material and a second uncoated portion (122) not coated with the second active material, the second uncoated portion (122) is connected to the second coated portion (121) and located at one end of the second electrode piece (12) in the winding direction;
at least part of the second uncoated portion (122) is affixed to the side wall (211).

9. The battery cell according to claim 8, wherein the second uncoated portion is wound for multiple turns around the adapter; and
the second uncoated portion is welded to the side wall, preferably wherein
the casing further comprises a bottom wall and a transition wall, the bottom wall is arranged at one side, away from the electrode lead-out portion, of the electrode assembly, the transition wall is connected to the side wall and the bottom wall, and an inner surface of the transition wall is an arc surface, and more preferably wherein projection of the second coated portion is within projection of the bottom wall in a thickness direction of the bottom wall.

10. The battery cell according to claim 9, wherein the battery cell further comprises a spacer disposed between the bottom wall and the electrode assembly to separate the second coated portion from the arc surface.

11. A battery, comprising at least one of the battery cells according to claims 1 to 10.

12. An electric device, comprising the battery according to claim 11, the battery being configured to provide electrical energy.

13. A method for manufacturing a battery cell, comprising:
providing an adapter;
providing an electrode assembly comprising a first electrode piece, the first electrode piece being at least partially wound around the adapter and affixed to the adapter;
providing a housing comprising an electrode lead-out portion, wherein the electrode lead-out portion comprises a first recessed portion recessed with respect to an outer surface;
putting the adapter and the electrode assembly into the housing such that the outer surface is located at one side, away from the electrode assembly, of the electrode lead-out portion; and
welding the adapter to a bottom wall of the first recessed portion;
wherein the adapter is electrically connected to the electrode lead-out portion and the first electrode piece.

## Patentansprüche

1. Batteriezelle (7), umfassend:
eine Elektrodenbaugruppe (10), umfassend ein erstes Elektrodenstück (11);
ein Gehäuse (20), das konfiguriert ist, um die Elektrodenbaugruppe (10) aufzunehmen, und umfassend einen Elektrodenherausführungsabschnitt; und
einen Adapter (40), der konfiguriert ist, um den Elektrodenherausführungsabschnitt und das erste Elektrodenstück (11) elektrisch zu verbinden, wobei das erste Elektrodenstück (11) so konfiguriert ist, dass das erste Elektrodenstück (11) mindestens teilweise um den Adapter (40) gewickelt und an dem Adapter (40) angebracht ist;
**dadurch gekennzeichnet, dass**
der Elektrodenherausführungsabschnitt einen ersten vertieften Abschnitt (223) umfasst, der in Bezug auf eine äußere Oberfläche (222) vertieft ist, wobei sich die äußere Oberfläche (222) an einer Seite des Elektrodenherausführungsabschnitts befindet, die von der Elektrodenbaugruppe (10) entfernt ist, und der Adapter (40) an eine untere Wand des ersten vertieften Abschnitts (223) geschweißt ist.

2. Batteriezelle (7) nach Anspruch 1, wobei die Elektrodenbaugruppe (10) mit einem ersten Durchgangsloch (14) versehen ist und mindestens ein Teil des Adapters (40) in dem ersten Durchgangsloch (14) untergebracht ist.

3. Batteriezelle (7) nach Anspruch 1, wobei der Adapter (40) mit einem Klemmschlitz (41) versehen ist und ein Teil des ersten Elektrodenstücks (11) in den Klemmschlitz (41) eingesetzt und mit dem Adapter (40) verbunden ist, wobei das erste Elektrodenstück (11) vorzugsweise einen ersten beschichteten Abschnitt (111), der mit einem ersten Aktivmaterial beschichtet ist, und einen ersten unbeschichteten Abschnitt (112), der nicht mit dem ersten Aktivmaterial beschichtet ist, umfasst, wobei der erste unbeschichtete Abschnitt (112) mit dem ersten beschichteten Abschnitt (111) verbunden ist und sich an einem Ende des ersten Elektrodenstücks (11) in einer Wickelrichtung befindet;
mindestens ein Teil des ersten unbeschichteten Abschnitts (112) in den Klemmschlitz (41) eingesetzt ist,
noch bevorzugter, wobei der erste unbeschichtete Abschnitt (112) einen ersten Teil (112a), der in den Klemmschlitz (41) eingesetzt ist, und einen zweiten Teil (112b) umfasst, der den ersten Teil (112a) und den ersten beschichteten Abschnitt (111) verbindet;
der zweite Teil (112b) mindestens teilweise um die Außenseite des Adapters (40) gewickelt und an dem Adapter (40) angebracht ist, und noch bevorzugter, wobei der zweite Teil (112b) mindestens eine Umdrehung um den Adapter (40) gewickelt ist.

4. Batteriezelle (7) nach Anspruch 3, wobei der Adapter (40) eine erste Spule (42) und eine zweite Spule (43) umfasst, die mindestens teilweise beabstandet sind, die erste Spule (42) und die zweite Spule (43) an dem Elektrodenherausführungsabschnitt fixiert sind, und der Klemmschlitz (41) zwischen der ersten Spule (42) und der zweiten Spule (43) ausgebildet ist.

5. Batteriezelle (7) nach einem der Ansprüche 1 bis 4, wobei der Adapter (40) mit einem zweiten Durchgangsloch zum Aufnehmen eines Elektrolyten versehen ist, und/oder wobei das erste Elektrodenstück (11) über den Adapter (40) in einer Richtung weg von dem Elektrodenherausführungsabschnitt hinausgeht.

6. Batteriezelle (7) nach einem der Ansprüche 1 bis 5, wobei der Elektrodenherausführungsabschnitt einen ersten Lokalisierungsabschnitt (225) umfasst und der Adapter einen zweiten Lokalisierungsabschnitt (44) zum Anpassen an den ersten Lokalisierungsabschnitt umfasst, und vorzugsweise wobei
der erste Lokalisierungsabschnitt (225) einen Vorsprung umfasst und der zweite Lokalisierungsabschnitt (44) eine Nut umfasst; oder
der erste Lokalisierungsabschnitt (225) eine Nut umfasst und der zweite Lokalisierungsabschnitt (44) einen Vorsprung umfasst.

7. Batteriezelle (7) nach einem der Ansprüche 1 bis 6, wobei
das Gehäuse (20) eine Ummantelung (21) zum Aufnehmen der Elektrodenbaugruppe (10) umfasst und der Elektrodenherausführungsabschnitt von der Ummantelung (21) isoliert ist;
die Elektrodenbaugruppe (10) ferner ein zweites Elektrodenstück (12) umfasst, wobei das zweite Elektrodenstück (12) mindestens teilweise um den Adapter (40) gewickelt ist und elektrisch mit der Ummantelung (21) verbunden ist, und wobei die Ummantelung (21) vorzugsweise eine Seitenwand (211) umfasst, welche die Außenseite der Elektrodenbaugruppe (10) umgibt, und ein Teil des zweiten Elektrodenstücks (12) an der Seitenwand (211) angebracht ist.

8. Batteriezelle (7) nach Anspruch 7, wobei das zweite Elektrodenstück (12) einen zweiten beschichteten Abschnitt (121), der mit einem zweiten aktiven Material beschichtet ist, und einen zweiten unbeschichteten Abschnitt (122), der nicht mit dem zweiten aktiven Material beschichtet ist, umfasst, wobei der zweite unbeschichtete Abschnitt (122) mit dem zweiten beschichteten Abschnitt (121) verbunden ist und sich an einem Ende des zweiten Elektrodenstücks (12) in der Wicklungsrichtung befindet;
mindestens ein Teil des zweiten unbeschichteten Abschnitts (122) an der Seitenwand (211) angebracht ist.

9. Batteriezelle nach Anspruch 8, wobei der zweite unbeschichtete Abschnitt in mehreren Windungen um den Adapter gewickelt ist; und
der zweite unbeschichtete Abschnitt mit der Seitenwand verschweißt ist, vorzugsweise wobei
die Ummantelung ferner eine untere Wand und eine Übergangswand umfasst, wobei die untere Wand an einer Seite, entfernt von dem Elektrodenherausführungsabschnitt, der Elektrodenbaugruppe angeordnet ist, die Übergangswand mit der Seitenwand und der unteren Wand verbunden ist und eine innere Oberfläche der Übergangswand eine Bogenoberfläche ist, und noch bevorzugter, wobei der Vorsprung des zweiten beschichteten Abschnitts innerhalb des Vorsprungs der unteren Wand in einer Dickenrichtung der unteren Wand liegt.

10. Batteriezelle nach Anspruch 9, wobei die Batteriezelle ferner einen Abstandshalter umfasst, der zwischen der unteren Wand und der Elektrodenbaugruppe angeordnet ist, um den zweiten beschichteten Abschnitt von der Bogenoberfläche zu trennen.

11. Batterie, umfassend mindestens eine der Batteriezellen nach den Ansprüchen 1 bis 10.

12. Elektrische Vorrichtung, umfassend die Batterie nach Anspruch 11, wobei die Batterie konfiguriert ist, um elektrische Energie bereitzustellen.

13. Verfahren zum Herstellen einer Batteriezelle, umfassend:
Bereitstellen eines Adapters;
Bereitstellen einer Elektrodenbaugruppe, umfassend ein erstes Elektrodenstück, wobei das erste Elektrodenstück mindestens teilweise um den Adapter gewickelt und an dem Adapter angebracht ist;
Bereitstellen eines Gehäuses, umfassend einen Elektrodenherausführungsabschnitt, wobei der Elektrodenherausführungsabschnitt einen ersten vertieften Abschnitt umfasst, der in Bezug auf eine äußere Oberfläche vertieft ist;
Einführen des Adapters und der Elektrodenbaugruppe in das Gehäuse, sodass sich die äußere Oberfläche an einer von der Elektrodenbaugruppe entfernten Seite des Elektrodenherausführungsabschnitts befindet; und
Schweißen des Adapters an eine untere Wand des ersten vertieften Abschnitts;
wobei der Adapter elektrisch mit dem Elektrodenherausführungsabschnitt und dem ersten Elektrodenstück verbunden ist.

## Revendications

1. Cellule de batterie (7), comprenant :
un ensemble électrode (10) comprenant une première pièce d'électrode (11) ;
un logement (20), conçu pour recevoir l'ensemble électrode (10) et comprenant une partie conducteur de sortie d'électrode ; et
un adaptateur (40), conçu pour connecter électriquement la partie conducteur de sortie d'électrode et la première pièce d'électrode (11), la première pièce d'électrode (11) étant conçue de telle sorte que la première pièce d'électrode (11) soit au moins en partie enroulée autour de l'adaptateur (40) et fixée à l'adaptateur (40) ;
**caractérisée en ce que**
la partie conducteur de sortie d'électrode comprend une première partie en creux (223) en creux par rapport à une surface externe (222), la surface externe (222) est située au niveau d'un côté, éloigné de l'ensemble électrode (10), de la partie conducteur de sortie d'électrode, et l'adaptateur (40) est soudé à une paroi de fond de la première partie en creux (223).

2. Cellule de batterie (7) selon la revendication 1, dans laquelle l'ensemble électrode (10) est pourvu d'un premier trou traversant (14), et au moins une partie de l'adaptateur (40) est logée dans le premier trou traversant (14).

3. Cellule de batterie (7) selon la revendication 1, dans laquelle l'adaptateur (40) est pourvu d'une fente de serrage (41), et une partie de la première pièce d'électrode (11) est insérée dans la fente de serrage (41) et connectée à l'adaptateur (40), de préférence dans laquelle la première pièce d'électrode (11) comprend une première partie revêtue (111) revêtue avec un premier matériau actif et une première partie non revêtue (112) non revêtue avec le premier matériau actif, la première partie non revêtue (112) est connectée à la première partie revêtue (111) et située au niveau d'une extrémité de la première pièce d'électrode (11) dans une direction d'enroulement ;
au moins une partie de la première partie non revêtue (112) étant insérée dans la fente de serrage (41),
de manière davantage préférée dans laquelle la première partie non revêtue (112) comprend une première partie (112a) insérée dans la fente de serrage (41) et une deuxième partie (112b) connectant la première partie (112a) et la première partie revêtue (111) ;
la deuxième partie (112b) est au moins en partie enroulée autour de l'extérieur de l'adaptateur (40) et fixée à l'adaptateur (40), et encore de manière davantage préférée dans laquelle la deuxième partie (112b) est enroulée sur au moins un tour autour de l'adaptateur (40).

4. Cellule de batterie (7) selon la revendication 3, dans laquelle l'adaptateur (40) comprend un premier enrouleur (42) et un deuxième enrouleur (43) qui sont au moins en partie espacés, le premier enrouleur (42) et le deuxième enrouleur (43) sont fixés à la partie conducteur de sortie d'électrode, et la fente de serrage (41) est ménagée entre le premier enrouleur (42) et le deuxième enrouleur (43).

5. Cellule de batterie (7) selon l'une quelconque des revendications 1 à 4, dans laquelle l'adaptateur (40) est pourvu d'un deuxième trou traversant destiné à recevoir un électrolyte, et/ou dans laquelle la première pièce d'électrode (11) s'étend au-delà de l'adaptateur (40) dans une direction s'éloignant de la partie conducteur de sortie d'électrode.

6. Cellule de batterie (7) selon l'une quelconque des revendications 1 à 5, dans lequel la partie conducteur de sortie d'électrode comprend une première partie de localisation (225), et l'adaptateur comprend une deuxième partie de localisation (44) destinée à être associée avec la première partie de localisation, et de préférence dans laquelle
la première partie de localisation (225) comprend une saillie, et la deuxième partie de localisation (44) comprend une rainure ; ou
la première partie de localisation (225) comprend une rainure, et la deuxième partie de localisation (44) comprend une saillie.

7. Cellule de batterie (7) selon l'une quelconque des revendications 1 à 6, dans laquelle
le logement (20) comprend un boîtier (21) destiné à recevoir l'ensemble électrode (10), et la partie conducteur de sortie d'électrode est isolée du boîtier (21) ;
l'ensemble électrode (10) comprend en outre une deuxième pièce d'électrode (12), la deuxième pièce d'électrode (12) est au moins en partie enroulée autour de l'adaptateur (40) et est électriquement connectée au boîtier (21), et de préférence dans laquelle le boîtier (21) comprend une paroi latérale (211) entourant l'extérieur de l'ensemble électrode (10), et une partie de la deuxième pièce d'électrode (12) est fixée à la paroi latérale (211).

8. Cellule de batterie (7) selon la revendication 7, dans laquelle la deuxième pièce d'électrode (12) comprend une deuxième partie revêtue (121) revêtue avec un deuxième matériau actif et une deuxième partie non revêtue (122) non revêtue avec le deuxième matériau actif, la deuxième partie non revêtue (122) est connectée à la deuxième partie revêtue (121) et située au niveau d'une extrémité de la deuxième pièce d'électrode (12) dans la direction d'enroulement ;
au moins une partie de la deuxième partie non revêtue (122) est fixée à la paroi latérale (211).

9. - Cellule de batterie selon la revendication 8, dans laquelle la deuxième partie non revêtue est enroulée sur plusieurs tours autour de l'adaptateur ; et
la deuxième partie non revêtue est soudée à la paroi latérale, de préférence dans laquelle
le boîtier comprend en outre une paroi de fond et une paroi de transition, la paroi de fond est agencée au niveau d'un côté, éloigné de la partie conducteur de sortie d'électrode, de l'ensemble électrode, la paroi de transition est connectée à la paroi latérale et la paroi de fond, et une surface interne de la paroi de transition est une surface en arc, et de manière davantage préférée dans laquelle une projection de la deuxième partie revêtue se situe à l'intérieur d'une projection de la paroi de fond dans une direction d'épaisseur de la paroi de fond.

10. Cellule de batterie selon la revendication 9, dans laquelle la cellule de batterie comprend en outre un espaceur disposé entre la paroi de fond et l'ensemble électrode pour séparer la deuxième partie revêtue de la surface en arc.

11. Batterie, comprenant au moins l'une des cellules de batterie selon les revendications 1 à 10.

12. Dispositif électrique, comprenant la batterie selon la revendication 11, la batterie étant conçue pour fournir de l'énergie électrique.

13. Procédé de fabrication d'une cellule de batterie comprenant les étapes consistant à :
fournir un adaptateur ;
fournir un ensemble électrode comprenant une première pièce d'électrode, la première pièce d'électrode étant au moins en partie enroulée autour de l'adaptateur et fixée à l'adaptateur ;
fournir un logement comprenant une partie conducteur de sortie d'électrode, la partie conducteur de sortie d'électrode comprenant une première partie en creux en creux par rapport à une surface externe ;
placer l'adaptateur et l'ensemble électrode dans le logement de telle sorte que la surface externe soit située au niveau d'un côté, éloigné de l'ensemble électrode, de la partie conducteur de sortie d'électrode ; et
souder l'adaptateur à une paroi de fond de la première partie en creux ;
l'adaptateur étant électriquement connecté à la partie conducteur de sortie d'électrode et la première pièce d'électrode.
